(19) Europäisches Patentamt
European Patent Office
Office européen des brevets

(11) Veröffentlichungsnummer : **0 047 903**
**B1**

(12) # EUROPÄISCHE PATENTSCHRIFT

(45) Veröffentlichungstag der Patentschrift : **02.05.84**

(51) Int. Cl.³ : **C 25 B 3/02**, H 01 B 1/12, C 08 G 75/00, C 08 G 65/00, C 08 G 73/00, C 09 K 3/16

(21) Anmeldenummer : **81106758.6**

(22) Anmeldetag : **29.08.81**

(54) **Verfahren zur Herstellung elektrisch leitfähiger Polyaromaten und deren Verwendung in der Elektrotechnik und zur antistatischen Ausrüstung von Kunststoffen.**

(30) Priorität : **17.09.80 DE 3034988**

(43) Veröffentlichungstag der Anmeldung : **24.03.82 Patentblatt 82/12**

(45) Bekanntmachung des Hinweises auf die Patenterteilung : **02.05.84 Patentblatt 84/18**

(84) Benannte Vertragsstaaten : **BE DE FR GB**

(56) Entgegenhaltungen :
**EP-A- 0 016 305**
**DE-A- 1 643 931**
**DE-A- 1 813 486**
**US-A- 3 547 790**

(73) Patentinhaber : **BASF Aktiengesellschaft**
**Carl-Bosch-Strasse 38**
**D-6700 Ludwigshafen (DE)**

(72) Erfinder : **Naarmann, Herbert, Dr.**
**Haardtblick 15**
**D-6719 Wattenheim (DE)**
Erfinder : **Naegele, Dieter, Dr.**
**Obere Jakobstrasse 8**
**D-6520 Worms (DE)**
Erfinder : **Penzien, Klaus, Dr.**
**Bensheimer Ring 18**
**D-6710 Frankenthal (DE)**
Erfinder : **Schlag, Johannes, Dr.**
**Leuschnerstrasse 36**
**D-6700 Ludwigshafen (DE)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

EP 0 047 903 B1

# Verfahren zur Herstellung elektrisch leitfähiger Polyaromaten und deren Verwendung in der Elektrotechnik und zur antistatischen Ausrüstung von Kunststoffen

Die Erfindung betrifft ein Verfahren zur Herstellung von elektrisch leitfähigen Polyaromaten mit elektrischen Leitfähigkeitswerten größer als $10^{-2}$ S/cm und deren Verwendung in der Elektroindustrie zur Herstellung von Sonnenzellen, zur Umwandlung und Fixierung von Strahlung und zur Herstellung elektrischer und magnetischer Schalter sowie zur antistatischen Ausrüstung von Kunststoffen.

Es ist bereits bekannt, Polyphenylene durch oxidative Kupplung entsprechend der Literatur: « Macromolecular Syntheses Collective », Vol. 1, (1979) Seiten 109 bis 110, Verlag Wiley & Sons und « Naturwissenschaften » *7* (1951) Seiten 46 bis 61 herzustellen, wobei besonders einheitliche paraverkettete methylsubstituierte Derivate erhalten werden, die nicht zusätzlich durch ortho- oder metaverknüpfte Polymere verunreinigt sind. Heteropolyaromaten unterscheiden sich von den Polyphenylenen durch das Vorhandensein von Heteroatomen oder Heteroatome enthaltenden Gruppen zwischen den aromatischen Ringsystemen und durch das Vorhandensein von mindestens 2 Phenylengruppen oder kondensierten Systemen zwischen den Heteroatomen bzw. den Heteroatome enthaltenden Gruppen. Sie können analog der Vorschrift in « Macromolecular Synthesis » Vol. *6*, (1978) Seiten 45 bis 48 oder DE-PS 1 468 782 hergestellt werden.

Aus der DE-A-1 643 931 sowie der DE-A-1 813 486 und der US-A-3 547 790 waren Verfahren zur Herstellung von polymeren aromatischen Verbindungen bekannt, bei denen Aromaten oder substituierte Aromaten durch Elektrolysieren in Lösung in Gegenwart bestimmter komplexer Verbindungen oder von Flußsäure zu Polymeren kondensiert werden.

Der Erfindung lag die Aufgabe zugrunde, die Polyaromaten durch Zusätze in elektrisch leitfähige Polymere mit elektrischen Leitfähigkeitswerten größer als $10^{-2}$ S/cm umzuwandeln.

Diese Aufgabe wird erfindungsgemäß dadurch gelöst, daß man die Polyaromaten der allgemeinen Formeln I und II:

(I) 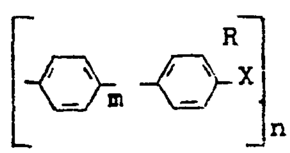 . 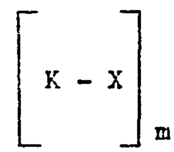 (II)

wobei X bedeutet: $SO_2$, S, O, NH, Se oder

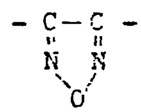

und

K = kondensierte Aromaten, z. B. Naphthalin, Anthracen, Perylen, Coronen, Biphenyl, Terphenyl,
R = $CH_3$ oder Phenyl, Cyclohexyl, sein kann und
m = 1 bis 5, vorzugsweise 1 bis 2,
n = 5 bis 100, vorzugsweise 5 bis 500 ist,

elektrochemisch, vorzugsweise anodisch, in Gegenwart von Leitsalzen oxidiert werden.

Als Leitsalze werden Verbindungen des Typs $A^+ B^-$ eingesetzt, wobei $A^+$ ein Kation, vorzugsweise $N^+R_4$, $P^+R_4$, ferner ein Alkali- oder Erdalkalimetall $H^+$, $NO^+$ oder $NO_2{}^+$ und $B^-$ ein Anion, vorzugsweise $SbF_6{}^-$, $AsF_6{}^-$, $PF_6{}^-$, $BF_4{}^-$, $SO_4{}^{--}$, $ClO_4{}^-$ und R ein aliphatischer, cycloaliphatischer oder aromatischer Rest ist.

Bevorzugt sind Heterpolyaromate mit einer S- oder O-Verknüpfung der Phenylenringe in para-Stellung. Die Heteropolyaromaten weisen ein Molekulargewicht von 800 bis 500 000, vorzugsweise zwischen 10 000 und 100 000 auf. Die Herstellung der Heteropolyaromaten kann nach der eingangs zitierten Literatur erfolgen. Gegebenenfalls können auch verschiedene Heteroatome X alternierend in einem Molekül vorkommen, z. B. wie in Formel III

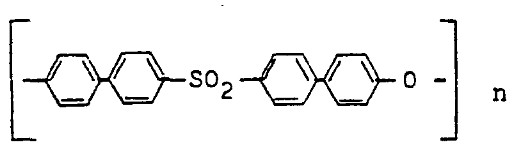 (III)

Die elektrischen Leitfähigkeitswerte werden in S/cm bei 30° gemessen, die Messung selbst erfolgt nach der Methode von F. Beck, Berichte Bunsengesellschaft, Physikalische Chemie *68* (1964) Seiten 558 bis 567. Die elektrischen Leitfähigkeitswerte der erfindungsgemäßen leitfähigen Heteropolyaromaten ist größer als $10^{-2}$ S/cm.

Nach dem erfindungsgemäßen Verfahren werden die Polyaromaten elektrochemisch, vorzugsweise anodisch, in Gegenwart von Leitsalzen oxidiert.

Die elektrochemische Behandlung erfolgt nach der von F. Beck in der Literaturstelle : « Elektroorganische Chemie » *1974,* Seite 100 bis 165 beschriebenen Methode.

Geeignete Leitsalze sind z. B. $(Butyl)_4NBF_4$, $N_9ClO_4$, $NO_2SbF_6$, $NO_2PF_6$, $N(C_4H_9)_4$ 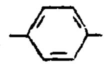 $SO_3H$

oder $H_2SO_4$.

Durch die genannten Zusätze können elektrische Leitfähigkeitsanstiege von einigen Größenordnungen erreicht werden. Die Polyaromaten haben Ausgangsleitfähigkeiten von weniger als $10^{-12}$ S/cm, liefern aber nach der Zugabe der erfindungsgemäßen Zusätze Leitfähigkeiten größer als $10^{-2}$ S/cm.

Die erfindungsgemäß hergestellten elektrisch leitfähigen Polyaromaten mit elektrischen Leitfähigkeiten größer als $10^{-2}$ S/cm sind zur antistatischen Ausrüstung von Kunststoffen, zur Herstellung von Sonnenzellen, zur Umwandlung von Fixierung von Strahlung sowie zur Herstellung elektrischer und magnetischer Schalter geeignet. Durch die Zusätze Leitsalze und elektrochemische Oxidation entstehen sog. p-Leiter (vgl. J. Chem. Education, Vol. *46,* Nr. 2, Seite 82 (1969)).

Die in den folgenden Beispielen genannten Teile sind Gewichtsteile bzw. Molprozente. Die Angaben der Gliederzahlen (Kettenlänge der Polyaromaten) erfolgt durch Endgruppenanalyse über IR-Bestimmung des Verhältnisses der monofunktionellen Endgruppe

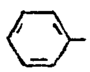 zur difunktionellen Mittelgruppe. 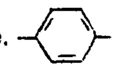

Die Bestimmung des Molgewichts erfolgt z. B. über die Intrinsic Viskosität dl/g in $CHCl_3$ bei 25 °C (Lit. A. S. Hay, Macromolecular Synthesis Coll. Vol. 1, Seite 82, (1978)).

## Beispiele 1 bis 7

10 Teile eines Polyaromaten werden vorzugsweise in Form eines Preßplättchens 3 × 1 cm, 0,3 cm stark als Elektrode (Anode) verwendet.

Variiert werden die Spannung und der Elektrolyt, was in der folgenden Übersicht zusammengestellt wird.

(Siehe Tabellen, Seite 4 ff.)

| Nr. | Poly 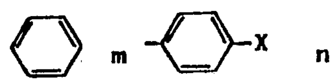 Typ und Menge | m | x | Molgew. | Leitsalz im Elektrolyten (Acetonitril) Art und Menge in Mol-% | | Leitfähigkeit S/cm 30°C vor dem Zusatz | nach der Elektrolyse |
|---|---|---|---|---|---|---|---|---|
| 1 | 10 Teile | 2 | S | 30 000 | $KAsF_6$ | 0,2 | $<10^{-13}$ | $2,0 \cdot 10^{+2}$ |
| 2 | 10 Teile | 3 | S | 12 000 | $KSbF_6$ | 0,18 | $<10^{-13}$ | $1,5 \cdot 10^{+1}$ |
| 3 | 10 Teile | 3 | O | 50 000 | $AgClO_4$ | 0,2 | $<10^{-13}$ | $1,5 \cdot 10^{+1}$ |
| 4 | 10 Teile | 3 | O | 26 000 | $KClO_4$ | 0,2 | $<10^{-13}$ | $1,8 \cdot 10^{+1}$ |
| 5 | 10 Teile | 2 | NH | 14 000 | 2,4,6-Trinitrophenylsulfonsäure | 0,2 | $<10^{-13}$ | $0,9 \cdot 10^{+1}$ |
| 6 | 10 Teile | 2 | Se | 24 000 | " " | 0,2 | $<10^{-13}$ | $5,3 \cdot 10^{-1}$ |
| 7 | 10 Teile | 4 | O | 30 000 | $NO^+SbF_6^-$ | 0,3 | $<10^{-13}$ | $5,2 \cdot 10^{-1}$ |
| 8 | 10 Teile | 3 | 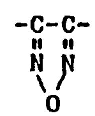 | 27 000 | $NO^+PF_6$ | 0,3 | $\sim 10^{-12}$ | $3,9 \cdot 10^{+1}$ |
| 9 | 10 Teile | 5 | S | 25 000 | $NO_2^+AsF_6^-$ | 0,3 | $<10^{-12}$ | $0,7 \cdot 10^{+2}$ |
| 10 | 10 Teile | 2 | $SO_2$ | 50 000 | " " | 0,3 | $<10^{-12}$ | $5,6 \cdot 10^{+1}$ |

| Nr. | 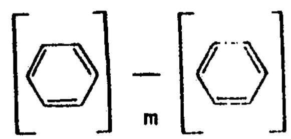 | m | x | Molgew. | Leitsalz im Elektrolyten (Acetonitril) Art und Menge in Mol-% | | Leitfähigkeit S/cm 30°C vor dem Zusatz | nach der Elektrolyse |
|---|---|---|---|---|---|---|---|---|
| 11 | 10 Teile | ca. 10 | - | 860 | $N(C_4H_9)_4ClO_4$ | 0,5 | $< 10^{-8}$ | $3,4 \cdot 10^{+1}$ |
| 12 | 10 Teile | 15 | - | 1 230 | " " | 0,5 | " | $2,8 \cdot 10^{+2}$ |
| 13 | 10 Teile | 20 | - | 1 630 | " " | 0,5 | " | $4,2 \cdot 10^{+2}$ |
| 14 | 10 Teile | 25 | - | 2 000 | " " | 0,5 | " | $3,9 \cdot 10^{+2}$ |
| 15 | 10 Teile | 40 | - | 3 100 | " " | 0,5 | " | $4,2 \cdot 10^{+1}$ |
| 16 | 10 Teile | 2 | - | 830 | " " | 0,5 | $< 10^{-12}$ | $2,9 \cdot 10^{+1}$ |

| Nr. | $[K\ X]_n$ Typ und Menge | m | x | Molgew. | Leitsalz im Elektrolyten Hexamethylphosphorsäure-triamid in Mol-% | | Leitfähigkeit S/cm 30°C vor dem Zusatz | Leitfähigkeit S/cm 30°C nach der Elektrolyse |
|---|---|---|---|---|---|---|---|---|
| 17 | 10 Teile K = Naphthalin | 2 | S | 350 | $NOAsF_6$ | 0,4 | $< 10^{-12}$ | $1,9 \cdot 10^{-2}$ |
| 18 | 10 Teile K = Anthracen | 2 | S | 500 | " " | 0,4 | $< 10^{-12}$ | $2,8 \cdot 10^{-1}$ |
| 19 | 10 Teile K = Perylen | 2 | S | 550 | " " | 0,4 | $< 10^{-12}$ | $3,9 \cdot 10^{-1}$ |
| 20 | 10 Teile K = Carbazol | 2 | S | 600 | " " | 0,4 | $< 10^{-12}$ | $4,2 \cdot 10^{+1}$ |
| 21 | 10 Teile K = Naphthalin | 40 | S | 6 100 | " " | 0,4 | $< 10^{-12}$ | $1,0 \cdot 10^{+1}$ |

Die Spannung in der Zelle betrug
bei den Versuchen 1 bis 8 20 Volt,
bei den Versuchen 9 bis 16 35 Volt und
bei den Versuchen 17 bis 21 60 Volt.

**Ansprüche**

1. Verfahren zur Herstellung von elektrisch leitfähigen Polyaromaten mit elektrischen Leitfähigkeitswerten größer als $10^{-2}$ S/cm, dadurch gekennzeichnet, daß die Polyaromaten der allgemeinen Formeln I und II :

(I) 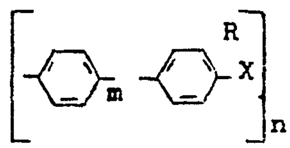 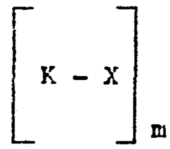 (II)

wobei X bedeutet : $SO_2$, S, O, NH, Se oder

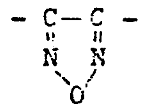

und
K = kondensierte Aromaten, z. B. Naphthalin, Anthracen, Perylen, Coronen, Biphenyl, Terphenyl,
R = $CH_3$ oder Phenyl, Cyclohexyl, sein kann und
m = 1 bis 5, vorzugsweise 1 bis 2,
n = 5 bis 1 000, vorzugsweise 5 bis 500 ist,
elektrochemisch, vorzugsweise anodisch, in Gegenwart von Leitsalzen oxidiert werden.

2. Verfahren nach Anspruch 1, dadurch gekennzeichnet, daß als Leitsalze Verbindungen des Typs $A^+B^-$ verwendet werden, wobei $A^+$ ein Kation, vorzugsweise $N^+R_4$, $P^+R_4$ ferner ein Alkali oder Erdalkalimetall, $H^+$, $NO^+$ oder $NO_2^+$ und $B^-$ ein Anion, vorzugsweise $PF_6^-$, $AsF_6^-$, $SbF_6^-$, $ClO_4^-$, $BF_4^-$, $SO_4^{--}$ und R ein aliphatischer, cycloaliphatischer oder aromatischer Rest ist.

3. Verwendung der nach Anspruch 1 hergestellten, leitfähigen Polyaromaten in der Elektrotechnik zur Herstellung von Sonnenzellen, zur Umwandlung und Fixierung von Strahlung und zur Herstellung elektrischer und magnetischer Schalter.

4. Verwendung der nach Anspruch 1 hergestellten leitfähigen Polyaromaten zur antistatischen Ausrüstung von Kunststoffen.

**Claims**

1. A process for the preparation of an electrically conductive polyaromatic having an electrical conductivity greater than $10^{-2}$ S/cm, wherein polyaromatics of the formulae I and II

(I) 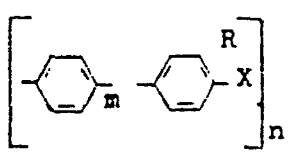 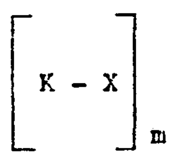 (II)

where X is $SO_2$, S, O, NH, Se or

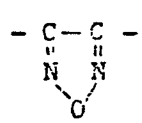

K is a fused aromatic, eg. naphtalene, anthracene, perylene, coronene, biphenyl or terphenyl,
R is $CH_3$, phenyl or cyclohexyl,
m is from 1 to 5, preferably 1 or 2, and
n is from 5 to 1,000, preferably from 5 to 500,
are oxidized electrochemically, preferably anodically, in the presence of a conductive salt.

2. A process as claimed in claim 1, wherein the conductive salt used is a compound of the type $A^+B^-$, where $A^+$ is a cation, preferably $N^+R_4$, $P^+R_4$, an alkali metal ion, an alkaline earth metal ion, $H^+$, $NO^+$ or $NO_2^+$, and $B^-$ is an anion, preferably $PF_6^-$, $AsF_6^-$, $SbF_6^-$, $ClO_4^-$, $BF_4^-$ or $SO_4^{--}$, and R is an aliphatic, cycloaliphatic or aromatic radical.

3. Use of a conductive polyaromatic, prepared according to claim 1, in the electrical industry for the production of solar cells, for converting and fixing radiation and for the production of electrical and magnetic switches.

4. Use of a conductive polyaromatic, prepared according to claim 1, for the antistatic treatment of plastics.

**Revendications**

1. Procédé de préparation de polyaromates électroconducteurs avec des conductibilités électriques supérieures à $10^{-2}$ S/cm, caractérisé en ce que l'on oxyde par voie électrochimique et de préférence par voie anodique, en présence de sels conducteurs, des polyaromates des formules générales I et II

(I) 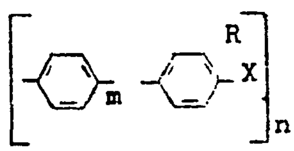 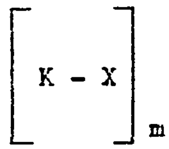 (II)

dans lesquelles X= $SO_2$, S, O, NH, Se ou

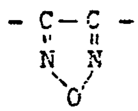

K désigne des aromates condensés tels que le naphtalène, l'anthracène, le pérylène, le coronène, le biphényle, le terphényle, etc. ;

R = $CH_3$, phényle ou cyclohexyle ;

m vaut 1 à 5 et de préférence 1 ou 2 et

n vaut 5 à 1 000 et de préférence 5 à 500.

2. Procédé suivant la revendication 1, caractérisé en ce que les sels conducteurs sont choisis parmi les composés du type $A^+B^-$, où $A^+$ est un cation, de préférence $N^+R_4$ ou $P^+R_4$, un métal alcalin ou alcalino-terreux, $H^+$, $NO^+$ ou $NO_2^+$, et $B^-$ un anion, de préférence $PF_6^-$, $AsF_6^-$, $SbF_6^-$, $ClO_4^-$, $BF_4^-$ ou $SO_4^{--}$, et R un reste aliphatique, cycloaliphatique ou aromatique.

3. Utilisation de polyaromates électroconducteurs, préparés par le procédé de la revendication 1, dans l'électrotechnique pour la fabrication de cellules solaires, pour la transformation et la fixation de radiations et pour la fabrication de commutateurs électriques ou magnétiques.

4. Utilisation de polyaromates électroconducteurs selon la revendication 1 pour l'apprêtage antistatique de matières plastiques.